(19) Europäisches Patentamt
European Patent Office
Office européen des brevets

(11) **EP 3 358 460 B1**

(12) **EUROPEAN PATENT SPECIFICATION**

(45) Date of publication and mention
of the grant of the patent:
**23.10.2019 Bulletin 2019/43**

(51) Int Cl.:
***G06F 7/556*** (2006.01)

(21) Application number: **18154099.8**

(22) Date of filing: **30.01.2018**

(54) **SYSTEMS AND METHODS FOR COMPUTING MATHEMATICAL FUNCTIONS**

SYSTEME UND VERFAHREN ZUR BERECHNUNG MATHEMATISCHER FUNKTIONEN

SYSTÈMES ET PROCÉDÉS PERMETTANT DE CALCULER DES FONCTIONS MATHÉMATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2017 US 201715422862**

(43) Date of publication of application:
**08.08.2018 Bulletin 2018/32**

(73) Proprietor: **Vivante Corporation**
**San Jose, CA 95002 (US)**

(72) Inventors:
• **Zhong, Lefan**
  **San Jose, CA 95002 (US)**
• **Cao, Zhiwei**
  **San Jose, CA 95002 (US)**

(74) Representative: **Betten & Resch**
**Patent- und Rechtsanwälte PartGmbB**
**Maximiliansplatz 14**
**80333 München (DE)**

(56) References cited:
**US-A- 6 128 638**       **US-A1- 2007 061 389**
**US-A1- 2010 030 833**

**Description**

BACKGROUND

RELATED APPLICATION

This application is a related to U.S. Application Serial No. 14/486,891 filed September 15, 2014, and entitled "Systems and Methods for Computing Mathematical Functions".

FIELD OF THE INVENTION

The invention related generally to the field of computer systems and more particularly to computational functions for graphics processor chips

BACKGROUND OF THE INVENTION

Graphics processor chips traditionally employ various mathematical functions implemented in hardware for fast drawing and rendering speed. Some examples of these mathematical functions include reciprocal function ("RCP"), reciprocal square root function ("SQRT"), exponential function ("EXP") and logarithmic function ("LOG"). These mathematical functions are implemented in prior art as separate circuitry blocks with different algorithms.

US 6,128,638 discloses a hardware implementation which approximates $X^Y$.

For example, in a three cycle RCP implementation in the prior art, a floating point number x may be represented as a concatenation of a most significant bits ("MSB") portion x0 and a least significant bits ("LSB") portion x1 where x1=x-x0. The main calculation for reciprocal of x is in the calculation of mantissa. Mantissa is typically calculated in a two term function: $f(x)=a+b(x-x0)$ in the prior art, where a and b are data look up tables. In a typical example, where more than 21 bit precision is required for a graphics processor, there needs to be over 16,000 entries in each of the data look up tables a and b to achieve the required precision. This is based on a 14 bit x0 and data look up tables with 2.sup.14 entries each. The hardware implementation of such large data look up tables results in large gate counts proportional to the size of the data look up tables. Graphic processor chips may include hardware implementation of several mathematical functions. In prior art examples, each of these mathematical functions requires large gate count and is typically combined with other methods. It is common technique in the prior art to implement each of these mathematical functions with separate logic circuitry and separate large data look up tables. As high speed and mobile applications demand higher integration and lower power consumption, there are needs for an efficient algorithm to implement these various mathematical functions.

The invention is defined by the appended claims.

BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:

Fig. 1 is a schematic block diagram of a computer system;
Fig. 2 is a block diagram illustrating a 6 stage unified hardware pipeline according to an embodiment of the present invention;
Fig. 3 is a block diagram illustrating a 3 stage RCP hardware pipeline according to an embodiment of the present invention;
Fig. 4 is a flow chart diagram illustrating an algorithm for calculating various exemplary data look up table according to an embodiment of the present invention;
Fig. 5 is a flow chart diagram illustrating an alternative unified hardware pipeline according to an embodiment of the present invention;
Fig. 6 is a block diagram illustrating an apparatus and method for computing $X^Y$ in accordance with an embodiment of the present invention; and
Fig. 7 is a block diagram illustrating an alternative apparatus and method for computing Log2(x) in accordance with an embodiment of the present invention.

DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The invention has been developed in response to the present state of the art and, in particular, in response to the problems and needs in the art that have not yet been fully solved by currently available apparatus and methods.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

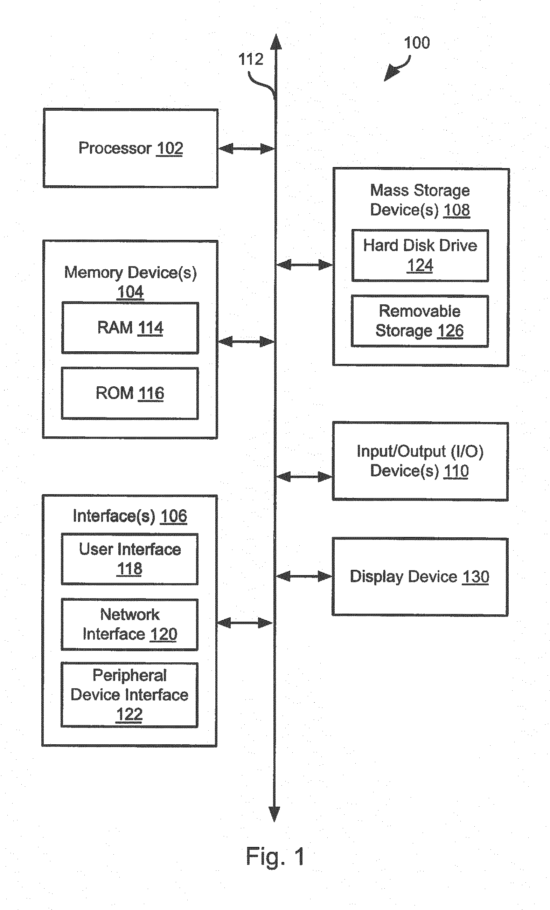

Fig. 1 is a block diagram illustrating an example computing device 100. Computing device 100 may be used to perform various procedures, such as those discussed herein. Computing device 100 can function as a server, a client, or any other computing entity. Computing device can perform various monitoring functions as discussed herein, and can execute one or more application programs, such as the application programs described herein. Computing device 100 can be any of a wide variety of computing devices, such as a desktop computer, a notebook computer, a server computer, a handheld computer, tablet computer and the like.

Computing device 100 includes one or more processor(s) 102, one or more memory device(s) 104, one or more interface(s) 106, one or more mass storage device(s) 108, one or more Input/Output (I/O) device(s) 110, and a display device 130 all of which are coupled to a bus 112. Processor(s) 102 include one or more processors or controllers that execute instructions stored in memory device(s) 104 and/or mass storage device(s) 108. Processor(s) 102 may also include various types of computer-readable media, such as cache memory.

Memory device(s) 104 include various computer-readable media, such as volatile memory (e.g., random access memory (RAM) 114) and/or nonvolatile memory (e.g., read-only memory (ROM) 116). Memory device(s) 104 may also include rewritable ROM, such as Flash memory.

Mass storage device(s) 108 include various computer readable media, such as magnetic tapes, magnetic disks, optical disks, solid-state memory (e.g., Flash memory), and so forth. As shown in Fig. 1, a particular mass storage device is a hard disk drive 124. Various drives may also be included in mass storage device(s) 108 to enable reading from and/or writing to the various computer readable media. Mass storage device(s) 108 include removable media 126 and/or non-removable media.

I/O device(s) 110 include various devices that allow data and/or other information to be input to or retrieved from computing device 100. Example I/O device(s) 110 include cursor control devices, keyboards, keypads, microphones, monitors or other display devices, speakers, printers, network interface cards, modems, lenses, CCDs or other image capture devices, and the like.

Display device 130 includes any type of device capable of displaying information to one or more users of computing device 100. Examples of display device 130 include a monitor, display terminal, video projection device, and the like.

Interface(s) 106 include various interfaces that allow computing device 100 to interact with other systems, devices, or computing environments. Example interface(s) 106 include any number of different network interfaces 120, such as interfaces to local area networks (LANs), wide area networks (WANs), wireless networks, and the Internet. Other interface(s) include user interface 118 and peripheral device interface 122. The interface(s) 106 may also include one or more user interface elements 118. The interface(s) 106 may also include one or more peripheral interfaces such as interfaces for printers, pointing devices (mice, track pad, etc.), keyboards, and the like.

Bus 112 allows processor(s) 102, memory device(s) 104, interface(s) 106, mass storage device(s) 108, and I/O device(s) 110 to communicate with one another, as well as other devices or components coupled to bus 112. Bus 112 represents one or more of several types of bus structures, such as a system bus, PCI bus, IEEE 1394 bus, USB bus, and so forth.

For purposes of illustration, programs and other executable program components are shown herein as discrete blocks, although it is understood that such programs and components may reside at various times in different storage components of computing device 100, and are executed by processor(s) 102. Alternatively, the systems and procedures described herein can be implemented in hardware, or a combination of hardware, software, and/or firmware. For example, one or more application specific integrated circuits (ASICs) can be programmed to carry out one or more of the systems and procedures described herein.

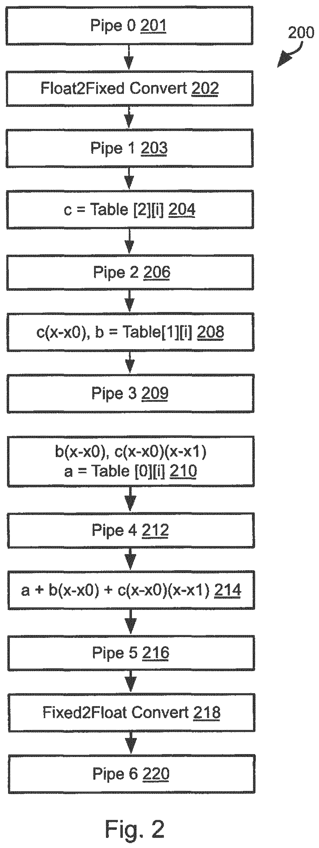

Fig. 2 is a block diagram illustrating a 6 stage unified hardware pipeline according to an embodiment of the present invention. Here, block 101, block 103, block 105, block 107, block 109, block 111, and block 113 are the register stages of the pipeline. Block 102 is a floating point to fixed point converter. Block 112 is a fixed point to floating point converter. In an example, block 112 may be configured to be bypassing circuit according to an opcode (i.e., a configuration instruction, a micro-code, or the like) for implementing an EXP function. In another example block 102 may be configured to be bypassing circuit according to another opcode (i.e., a configuration instruction, a micro-code, or the like) for implementing an LOG function. In still other examples, both block 102 and block 112 may be configured to be bypassing circuits according to yet another opcode (i.e., a configuration instruction, a micro-code, or the like) in implementing RCP or SQRT functions. In some examples, block 104, 106, 108, and 110 may implement various portions of the quadratic approximation for calculating mathematical functions such as RCP, SQRT, EXP, LOG or the like based on separate data look up tables. For example, block 104 implements data table look up for c based on an integer i corresponding to mantissa of a floating point number x. Likewise, block 106 implements data table look up for b. During the same pipeline stage, block 106 also calculates $c(x-x0)$. Similarly, block 108 implements data table look up for a as well as calculation of $b(x-x0)$ and $c(x-x0)(x-x1)$. Block 110 implements summation of three terms for calculating the quadratic approximation. The above description is not limited to the details described above and various modifications or alternations as made obvious by the above description may be made.

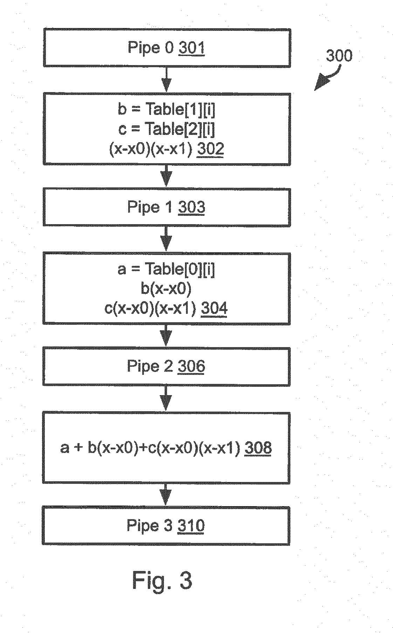

Fig. 3 is a block diagram illustrating a 3 stage RCP hardware pipeline according to an embodiment of the present invention. Here, block 201, block 203, block 205, and block 207 are the register stages of the pipeline. In some examples, block 202, 204, and 206 may implement various portions of the quadratic approximation. For example, block 202 implements data table look up for b and c based on an integer i corresponding to MSB of mantissa of a floating point number. During the same pipeline stage, block 202 also calculates $(x-x0)(x-x1)$. Likewise, block 204 implements data table look up for a as well as calculation of $b(x-x0)$ and $c(x-x0)(x-x1)$. In some implementations $(x1-x)$ may be calculated as $NOT(x-x0)$, where NOT is the bitwise operation that changes 1 to 0 and 0 to 1. Block 206 implements summation of three terms for calculating the quadratic approximation. The above description is not limited to the details described above and various modifications or alternations as made obvious by the above description may be made.

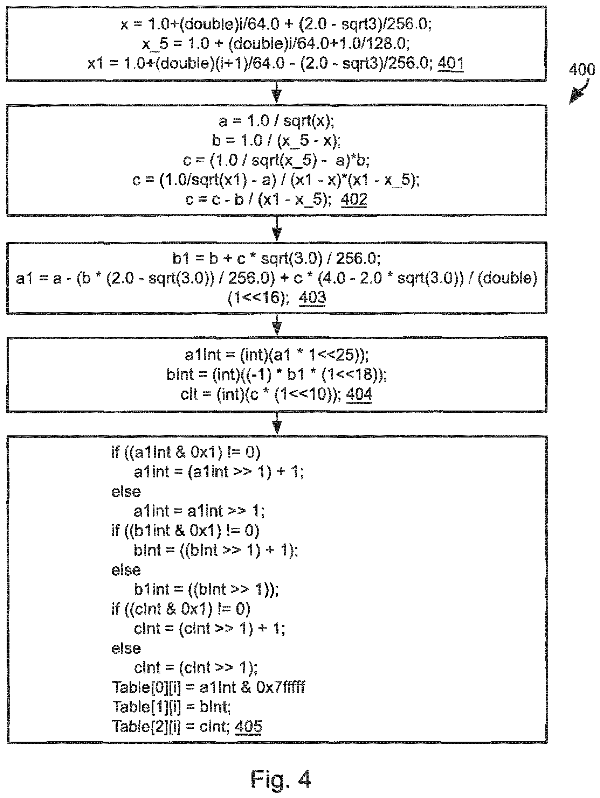

Fig. 4 is a flow chart diagram illustrating an exemplary algorithm for calculating various data look up tables according to an embodiment of the present invention. Here, an exemplary algorithm is illustrated for computing data tables a, b and c for SQRT. In this example, table[0][i]=a, table[1][i]=b and table[2][i]=c. Three linear equations are used to compute three values a, b and c. These three equations are solved by first computing the start point (i.e., x), middle point (i.e., x.sub.--5) and end point (i.e., x1) of a segment (301). Blocks 302 and 303 compute a, b and c in floating point format. Block 304 converts a, b and c to integer format. Block 305 does the rounding and produces the final value. As another example, the "sqrt" function in block 302 may be replaced by reciprocal function to adapt the algorithm for computing data tables a, b and c for RCP. In other examples, the "sqrt" function in block 302 may be replaced by other functions (e.g., EXP, LOG, or the like) to adapt the algorithm for computing data tables a, b and c for these other functions. The above description is not limited to the details described above and various modifications or alterations as made obvious by the above description may be made. The flow chart of Fig. 4 may be suitable for implementing a table of 64 entries. Other entries, such as 128 entries may also be used.

The above-described method provides a unified method to compute the list of above-identified transcendental functions with one unified hardware pipeline in floating point values, such as for a vertex shader and pixel shader in a mobile graphics chip. This technique may be based on computing of the following: $F(x) = 1/x$; $F(x) = 1/x^{(1/2)}$; $F(x) = 2^x$ and $F(x) = LOG2(x)$.

These functions are implemented with a unified hardware pipe that performs the following function: $F(x) = a + b(x-x0) + c(x-x0)(x-x1)$ (hereinafter "the interpolation function"). The approximation may be done in 64, 128, or some other number segments, where x0 is the starting value of a segment and x1 is the ending value of a segment. X0 is the MSB (most significant bits) portion of x, (x - x0) is the LSB (least significant bits) of portion of x. The value of x is between x0 and x1 (x0 <= x < x1). The values a, b and c are from three separate tables, such as tables embedded in hardware.

For EXP, a floating point to fixed point number conversion stage is positioned before the unified hardware pipe. For LOG, there is a fixed point to floating point number conversion after the unified hardware pipe. The hardware flow and function is the same for each of the four functions, except the table chosen for each function is different. An input opcode chooses the function. The low latency efficiency RCP (reciprocal) implementation based on this approach can be reduced to 3 cycles.

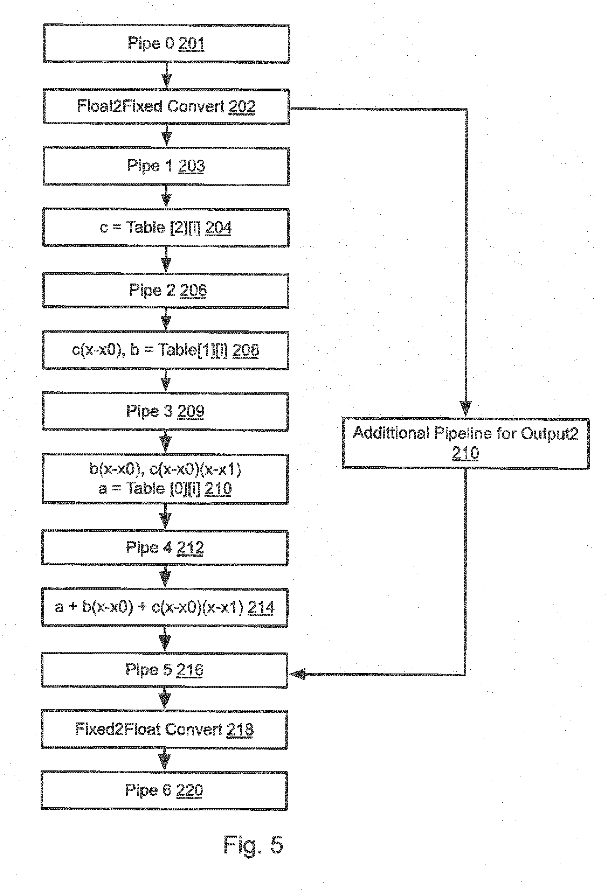

Referring to Fig. 5, logic devices may be added to the pipeline of Figs. 1 and 2 to speed up the calculation of $Sin(\pi x)$, $Cos(\pi x)$, $LOG2(x)$ and DIV (i.e. y/x). For example, the additional logic may be implemented based on the formula: $Sin(\pi x) = Sin(\pi*(IntX + FracX)) = (-1)^{IntX} *Sin(\pi*FracX)$, where IntX is the integer portion of an input floating point argument x and FracX is the fractional portion of the input x. Accordingly, instead of approximate $Sin(\pi x)$ directly, it may be approximated according to $F(x) = Sin(\pi*FracX)/FracX$. Accordingly, the modified pipeline of Fig. 5 may produce an additional output (output2) equal to FracX, such as from the Float2Fixed converting logic 202. The pipeline may be further modified to compute $Sin(\pi x) = F(x)*output2$, where F(x) is the approximation of the function $Sin(\pi*FracX)/FracX$, such as according to the pipeline stages 203-214. Specifically, F(x) is the result of interpolation among entries of tables selected according to the value of FracX as the input argument, such as according to the pipelines and methods as described hereinabove. In the illustrated embodiment, multiplication of F(x) by output2 may be performed at stage 216 of the pipeline. For $Cos(\pi x)$, $Cos(\pi x) = Sin(\pi(x+0.5))$. So the same logic of $Sin(\pi x)$ may be used to get the result. In some embodiment, $Sin(\pi x)$ is computed using $F(x) = Sin(\pi*FracX)/FracX$ and output2 = FracX if (FracX <= 0.5f), where 0.5f is a floating point value equal to ½. In some embodiments for $Sin(\pi x)$, if FracX > 0.5f, $F(x) = Sin(\pi*(1.0 - FracX))/(1.0 - FracX)$, and output2 is 1.0-FracX. For example, more generally, for $Sin(\pi x)$, $F(x) = ((-1)^{IntX})*Sin(\pi*Min(FracX, 1.0 - FracX))/Min(FracX, 1.0 - FracX)$, the output2 is Min(FracX, 1.0 - FracX), where IntX is the integer portion of x.

When input argument x is close to 1.0, Log2(x) is very small. Instead of approximation LOG2(x) directly, it may be approximated as $F(x) = Log2(x - 1)/(x - 1)$. Accordingly, for LOG2 output2 may be set equal to x - 1. So $LOG2(x) = F(x)*output2$, where output2 is equal to (x - 1) and F(x) is an approximation of $LOG2(x-1)/(x-1)$ computed using tables and interpolation within the hardware pipeline as described herein. The values of x for which this modification is performed by be selected based on the floating point representation used. For example, in some embodiments, when x is in the range of [0.75, 1.5), $F(x) = LOG2(x-1)/(x-1)$, output2 = (x-1). Otherwise, for LOG2(x), $F(x) = LOG2(x)$, and output2 = 1.0f.

For DIV (e.g. y/x), using the relationships $y/x = y*(1/x) = y*Rcp(x)$, there may be 1/x underflow issue, when $|x| > 2^{126}$, 1/x = 0 in 32 bit floating point expression. Underflow at $|x| > 2^{126}$ occurs since the maximum floating point value is $2^{127}*1.11111111$ and in "floating point normal expression", the minimum value is $2^{(-126)}$. Where denormalized numbers are used, the minimum value can be $2^{(-149)}$. In this case, both input arguments x and y may be scaled by $2^{32}$, i.e. $y/x = (y/2^{32})/(x/2^{32})$. So in the hardware pipeline, an additional pipeline stage may be used to scale down both y/x when x is over some range (e.g. greater than $2^{64}$). This additional stage may be performed prior to pipeline steps for selecting table values and performing the interpolation steps as described herein.

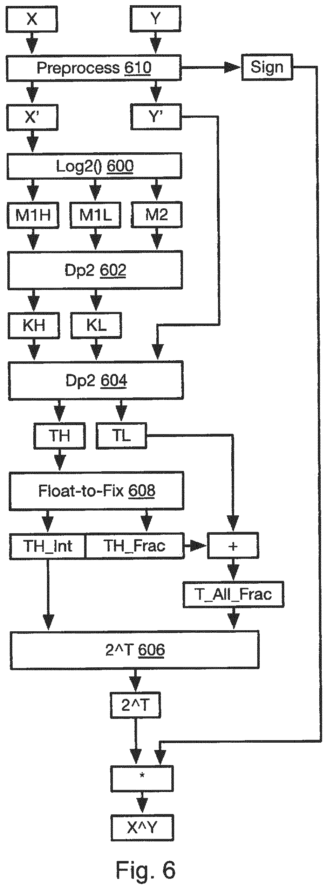

Fig. 6 illustrates a method for computing $X^Y$ (also denoted as X^Y herein). When calculating $X^Y$ one may use (1.1).

$$X^Y = 2^{Y*Log2(X)} \qquad\qquad (1.1)$$

This is particularly useful since the $2^T$ and y*Log2(x) are much simpler to implement. However, where high precision is needed (e.g., a relative error of 16-UL P(unit in the last place) in OpenCL) this approach is problematic.

If Log2(x) has a relative error $\varepsilon$, which is typically in the range of $\pm 2^{-24}$, when calculating t = y * Log2(x), one obtains t' = y *(Log2(x) (1+ $\varepsilon$) = t + t*$\varepsilon$. The Final calculation will be $2^t * 2^{t*\varepsilon} \approx 2^t(1 + t * \varepsilon * log_e^{2.0})$. The relative error will therefore become 0.69314*t*$\varepsilon$. For single precision calculation, t may be in the range of (-126, 127) in order to keep $2^t$ in the single precision range. Accordingly, 0.69314*t*$\varepsilon$ may in the range of 88.029*$\varepsilon$. This means the relative error may be increased by up to a factor of 88 times $\varepsilon$.

In prior approaches to implementing Log2(), the logic outputs values {M1, M2}, where M1 and M2 have single precision. The final value of Log2(x) is then calculated by computing M1*M2 with single precision, which results in a relative error of $\pm 2^{-24}$. Even if no additional error is introduced in subsequent calculations, the final relative error will still be on the order of $\pm 88.0 * 2^{-24}$, which is much larger than 16.0ULP requirement.

Accordingly, as shown in Fig. 6, the Log2(x) stage 600 may be programmed to output M1 as two flowing point values M1H and M1L as well as value M2. The values of M1H and M1L are such that M1H + M1L is equal to M1 with at least 30 bits of precision. For example, M1H may be a floating point value of 24 bit precision corresponding to the most significant 24 bits of M1. M1L may be a floating point value of 6 bits precision corresponding to the least significant 6 bits of M1. M2 may be a remain a single precision value (i.e., 24 bits).

As shown in Fig. 6, the values of M1H, M1L and M2 may be input to a two input dot product (Dp2) stage 602. In particular, the Dp2 function calculates M2*M1H + M2*M1L = {KH, KL}, where KH and KL are each floating point values such that KH is the high 24 bit precision result of the Dp2 stage 602 and KL is the low 24 bit precision result of the Dp2 stage 602.

The values of KH and KL may be input to a Dp2 stage 604 along with Y'. As outlined below, Y' is a version of the input argument Y that may be modified to deal with problematic corner cases. In an alternative embodiment, Y' is simply the same as the input argument Y. The Dp2 function calculates Y'*KH + Y'*KL = {TH, TL}, where TH and TL are two floating point values (high 24 bit precision + low 24 bit precision).

Note that the Dp2 stages 602 and 604 may be the same hardware component that is used at both stages of the illustrated process. In some embodiments, the Dp2 function is implemented by a portion of four input dot product logic (Dp4).

In prior hardware implementations of Dp2 (x1*y1 + x2*y2) shares much of the same logic as Fma (fused multiply add, i.e. a*b+c). Since Fma needs to keep all multiply bits in order to handle some bit cancellation cases, the middle result has at least 48 bit precision. However, conventional Dp2 rounds to a 24 bit mantissa (single float precision) and outputs one float value. Accordingly, the Dp2 stages 602, 604 may include added logic such that they output two floating point values, i.e. the full 48 bits of precision internal to the Dp2 logic prior to rounding.

The values TH and TL may be input as the input argument T to transcendental stage 606 implementing $2^T$ that takes an extended precision input, i.e. the 48 bits of precision of TH, TL.

In the illustrated argument, TH and TL are modified prior to input to the transcendental stage 606. For example, float-to-Fix logic 608, which is programmed to separate TH into an integer part (TH_Int) and fractional part (TH_Frac). TL will only have a fractional part. Accordingly, the process may include summing TH_Frac and TL to obtain T_ALL_Frac. TH_Int and T_All_Frac may then be input to the transcendental stage 606, which calculates 2^(TH_Int + T_All_Frac). The transcendental stage 606 may calculate this value using any approach for calculating 2^T known in the art.

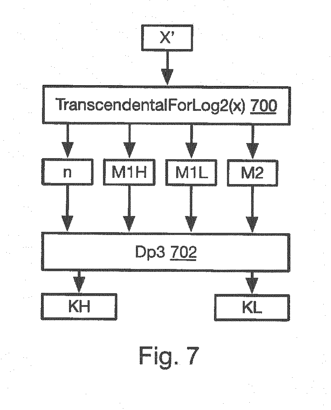

Referring to Fig. 7, in some embodiments, the Log2() stage 600 is implemented using tables. For example, using the approach described above with respect to Figs. 2-5. In some implementations, there are two tables for calculating Log2(x), one table is used for 0.75≤ x <1.5, the other is used for x outside of this interval. Since high precision requires that the table will become bigger, in some embodiments on the table for 0.75≤x<1.5 is used. In such embodiments, the Log2() function may be replaced with transcendental function 700 that implements (1.2).

$$\text{TranscedentalForLog(X)} = \{n, M1H, M1L, M2\} \qquad (1.2)$$

The values of n, M1H, M1L, and M2 may be calculated by the transcendental function 700 as described below.

Positive X may be written in the float format of (1.3).

$$x = 2^k *(1+s), \qquad (1.3)$$

where k is an integer and $0 \leq s < 1.0$,

If one notes (1.4)

$$p = s \geq 0.5 \,?\, (1 + s)/2 : (1+s), \tag{1.4}$$

one can write (1.5).

$$x = 2^n * p, \text{ with } 0.75 \leq p < 1.5 \tag{1.5}$$

where n is determined according to (1.6).

$$n = s \geq 0.5 \,?\, k + 1 : k \tag{1.6}$$

In this case one may calculate M2 = 1 - p and {M1H, M1L} = (Log2(1-p))/(1-p). Log2() in this embodiment may be implemented using the table for 0.75≤x<1.5.

The value for Log2(x) be the be calculated according to (1.7).

$$Log2(x) = n*1.0 + M1H*M2 + M1L*M2, \tag{1.7}$$

which can be processed with a three input dot product function 702 (Dp3, x1*y1 + x2*y2 + x3*y3). In some embodiments, both Dp2 and Dp3 are the implemented using the same logical circuit design, and possibly the same physical circuit, as Dp4.

Since (1.2) only uses one log table using the approach described above, it saves area on a chip. This benefit is achieved at the expense of additional normal floating point expressions (1.3) to (1.5). However, (1.4) and (1.6) are very easy to calculate. Note that (1.2) has a four floating point value output. Accordingly, it is readily implemented using a vector 4 GPU.

In OpenCL (open computing language standard), there are some corner cases such as (1.8).

$$(-3)^3 = -27, (-3)^2 = 9, (-3)^{0.33333333} = \text{Nan} \tag{1.8}$$

If one exactly follows (1.1), there will be errors since Log2(-3) = Nan. Accordingly, there may be a need to pre-process the input arguments X and Y to handle the corner cases. In particular, as shown in Fig. 6, a preprocessing stage 610 may process the input arguments X and Y to obtain corresponding values X', Y' and Sign according to a function Preprocess(X, Y) = {X', Y', Sign},

The values of X and Y may be processed according to stages 600-608 as described above. As shown in Fig. 6, the output of stage 606 may be multiplied by Sign to obtain the final estimation of $X^Y$. The function Preprocess(X, Y) may operate according to Table 1, below.

Table 1. Preprocess(X, Y) Outputs

| Input X | Input Y | Output X' | Output Y' | Sign | Final Expected Output |
|---------|---------|-----------|-----------|------|-----------------------|
| Any Value | 0.0 | 1.0 | 0.0 | 1.0 | 1.0 |
| 1.0 | Any Value | 1.0 | 0.0 | 1.0 | 1.0 |
| NAN | Any Value | 2.0 | NAN | 1.0 | NAN |
| ±0.0 | Positive Non Odd-Integer | 0.5 | $2^{127}$ | 1.0 | 0.0 |
| ±0.0 | Negative Non Odd-Integer | 0.5 | $-2^{127}$ | 1.0 | +INF |
| ±0.0 | Positive Odd-Integer | 0.5 | $2^{127}$ | Sign(x) | ±0.0 |
| ±0.0 | Negative Odd-Integer | 2.0 | $2^{127}$ | Sign(x) | ±INF |
| -INF | Positive Non Odd-Integer | 2.0 | $2^{127}$ | 1.0 | +INF |
| -INF | Negative Non Odd-Integer | 0.5 | $2^{127}$ | 1.0 | 0.0 |
| -INF | Positive Odd-Integer | 2.0 | $2^{127}$ | -1.0 | -INF |

(continued)

| Input X | Input Y | Output X' | Output Y' | Sign | Final Expected Output |
|---------|---------|-----------|-----------|------|------------------------|
| -INF | Negative Odd-Integer | 0.5 | $2^{127}$ | -1.0 | -0.0 |
| Any Value | $\pm$INF | \|x\| | $\pm2^{127}$ | 1.0 | 0/1.0/INF |
| x < 0 | Not Integer | 2.0 | NAN | 1.0 | NAN |
| x < 0 | Even Integer | \|x\| | y | 1.0 | $\|x\|^y$ |
| x < 0 | Odd Integer | \|x\| | y | -1.0 | $-\|x\|^y$ |
| All other cases | All other cases | x | y | 1.0 | $x^y$ |

For OpenCL calculation of pow(x, y) = $x^y$, the process, from start to finish may include:

(1) processing X and Y according to the preprocessing stage 610 to obtain X', Y', and Sign.
(2) X' is then processed according to the Log2() stage 600. As noted above, the Log2() function may be implemented using a table and may output M1H, M1L, and M2 which are then multiplied using Dp2 stage 602 as shown in Fig. 6 to obtain KH and KL. Alternatively, KH and KL may be obtained from X' using the approach shown in Fig. 7 as described above.
(3) The Dp2 stage 604 is used to calculate Y'*KH + Y'*KL = {TH, TL}, where TH is the high 24 bits and TL is the low 24 bits of the operation.
(4) TH and TL are processed according to the transcendental stage 606, which receives an extended precision input, {T_H, T_L}. As described above, the float-to-fix stage 608 separates TH into an integer part (TH_Int) and fractional part (TH_Frac). TH_Frac is then added to TL to obtain T_All_Frac. TH_Int and TH_Frac are then input into transcendental stage 606, which outputs an estimation of 2^(TH_Int + TH_Frac).
(5) The output of transcendental stage 606 is then multiplied by Sign to obtain the final result that is an estimation of X^Y.

According to exemplary embodiments, mathematical functions are computed in a single pipeline performing a polynomial approximation (e.g. a quadratic approximation, or the like) using data tables. The single pipeline is operable for computing at least one of RCP, SQRT, EXP or LOG functions according to the one or more opcodes. SIN and COS are also computed using the pipeline according to the approximation $((-1)^{IntX}*Sin(\pi*Min(FracX, 1.0 - FracX)/Min(FracX, 1.0 - FracX)$. A pipeline portion approximates $Sin(\pi*FracX)$ using tables and interpolation and a subsequent stage multiplies this approximation by FracX. For input arguments of x close 1.0. LOG2(x-1)/(x-1) is computed using a first pipeline portion using tables and interpolation and subsequently multiplied by (x-1). A DIV operation may also be performed with input arguments scaled up to avoid underflow as needed. An approach for computing X^Y is also disclosed.

The foregoing described embodiments of the invention are provided as illustrations and descriptions. They are not intended to limit the invention to precise form described. In particular, it is contemplated that functional implementation of invention described herein may be implemented equivalently in hardware, software, firmware, and/or other available functional components or building blocks, and that networks may be wired, wireless, or a combination of wired and wireless. Other variations and embodiments are possible in light of above teachings, and it is thus intended that the scope of invention not be limited by this Detailed Description, but rather by Claims following.

**Claims**

1. A method for calculating X^Y comprising:

(i) calculating, by an electronic device, a first transcendental function taking as an input a function of X, the first transcendental function outputting M1H, M1L and M2, wherein M2 has a first precision and M1H and M1L combined have a second precision greater than the first precision;
(ii) calculating, by a two element dot product (DP2) circuit of the electronic device, KH and KL according to a product of M1H and M2 and a product of M1L and M2;
(iii) calculating, by the electronic device, a product of (a) a function of Y and (b) both KH and KL to obtain a high significance output TH and low significance output TL;
(iv) calculating, by the electronic device, a second transcendental function according to a function of TH and TL to obtain an output that is an estimation of X^Y.

**2.** The method of claim 1, wherein the Dp2 circuit produces KH and KL such that KH and KL each have precision as great as M2.

**3.** The method of claim 1 or 2, wherein X if a floating point number having an exponent k and a mantissa s, the method further comprising:

calculating, by the electronic device, $p = s \geq 0.5$ ? $(1 + s)/2 : (1+s)$;
calculating, by the electronic circuit, M2 as $1 - p$;
calculating, by the electronic circuit, {M1H, M1L} as $(Log2(1-p))/(1-p)$, such that M1H is a high significance portion of a result of $(Log2 (1-p))/(1-p)$ and M1L is a low significance portion of a result of $(Log2(1-p))/(1-p)$;
calculating, by the electronic circuit, $n = s \geq 0.5$ ? $k + 1: k$; and
calculating, by the electronic circuit, {KH, KL} = $n*1.0 + M1H*M2 + M1L*M2$ such that KH is a high significance portion of a result of $n*1.0 + M1H*M2 + M1L*M2$ and KL is a low significance portion of $n*1.0 + M1H*M2 + M1L*M2$.

**4.** The method of claim 3, wherein calculating $(Log2(1-p))/(1-p)$ is performed by the electronic circuit using a table.

**5.** The method of claim 4, wherein calculating $n*1.0 + M1H*M2 + M1L*M2$ is performed using a three element dot product (Dp3) circuit.

**6.** The method of claim 5, wherein KH and KL have precision as great as M2.

**7.** The method of one of the preceding claims, wherein M1L has fewer bits of precision than M1H.

**8.** The method of one of the preceding claims, wherein the function of Y and the function of X are defined according to Table 1.

**9.** The method of claim 8, further comprising determining a sign value according to X and Y as defined in Table 1, the method further comprising setting, by the external device, a sign of the output from the second transcendental function according to the sign value.

**10.** The method of one of the preceding claims, wherein calculating the second transcendental function according to the function of TH and TL comprises:

obtaining, by the electronic device, TH_Int as an integer portion of TH;
obtaining, by the electronic device, TH_Frac as a fractional portion of TH;
combining, by the electronic device, TH_Frac and TL to obtain T_All_Frac; and
inputting, by the electronic device, TH_Frac and T_All_Frac into the second transcendental function to obtain the estimation of X^Y.

**11.** An electronic device for calculating X^Y comprising:

(i) a first transcendental function stage programmed to take as an input a function of X and outputting M1H, M1L and M2, wherein M2 has a first precision and M1H and M1L combined have a second precision greater than the first precision;
(ii) a first dot product stage programmed to output KH and KL according to a product of M1H and M2 and a product of M1L and M2;
(iii) a second dot product stage programmed to calclulate a product of (a) a function of Y and (b) both KH and KL to obtain a high significance output TH and low significance output TL;
(iv) a second transcendental function stage programmed to take as inputs a function of TH and TL and output an estimation of X^Y;

wherein M1L has fewer bits of precision than M1H;
wherein the first dot product stage and the second dot product stage are implemented using one or more four element dot product (Dp4) circuits.

**12.** The electronic device of claim 11, wherein:

the first dot product stage comprises a two element dot product (Dp2) circuit; and

the Dp2 circuit is programmed to output KH and KL such that KH and KL each have precision as great as M2.

13. The electronic device of claim 11 or 12, wherein X if a floating point number having an exponent k and a mantissa s, the electronic device is further programmed to:

calculate p = s $\geq$ 0.5 ? (1 + s)/2 : (1+s);
calculate M2 as 1 - p;
calculate {M1H, M1L} as (Log2(1-p))/(1-p), such that M1H is a high significance portion of a result of (Log2 (1-p))/(1-p) and M1L is a low significance portion of a result of (Log2 (1-p))/(1-p), where Log2(1-p) is implemented using the first transcendental function stage;
calculate n = s $\geq$ 0.5 ? k + 1: k; and
calculate {KH, KL} = n*1.0 + M1H*M2 + M1L*M2 such that KH is a high significance portion of a result of n*1.0 + M1H*M2 + M1L*M2 and KL is a low significance portion of n*1.0 + M1H*M2 + M1L*M2.

14. The electronic device of one of claims 11 to 13, wherein:

the electronic device is further programmed to calculate the function of X and the function of Y according to Table 1; and
the electronic device is further programmed to determine a sign value according to X and Y according to Table 1 and to set a sign of the output from the second transcendental function stage according to the sign value.

15. The electronic device of one of claims 11 to 14, wherein the electronic device is further programmed to calculate the function of TH and TL by:

obtaining TH_Int as an integer portion of TH;
obtaining TH_Frac as a fractional portion of TH;
combining TH_Frac and TL to obtain T_All_Frac; and
inputting TH_Frac and T_All_Frac into the second transcendental function stage.

## Patentansprüche

1. Verfahren zum Berechnen von X^Y, umfassend:

(i) Berechnen, durch eine elektronische Vorrichtung, einer ersten transzendentalen Funktion, die als Eingabe eine Funktion von X annimmt, wobei die erste transzendentale Funktion M1H, M1L und M2 ausgibt, wobei M2 eine erste Genauigkeit aufweist und M1H und M1L kombiniert eine zweite Genauigkeit aufweisen, die größer als die erste Genauigkeit ist;
(ii) Berechnen, durch eine Zwei-Element-Punktprodukt-(DP2)-Schaltung der elektronischen Vorrichtung, KH und KL gemäß einem Produkt aus M1H und M2 und einem Produkt aus M1L und M2;
(iii) Berechnen, durch die elektronische Vorrichtung, eines Produkts aus (a) einer Funktion von Y und (b) sowohl KH als auch KL, um eine hochsignifikante Ausgabe TH und eine niedrigsignifikante Ausgabe TL zu erhalten;
(iv) Berechnen, durch die elektronische Vorrichtung, einer zweiten transzendentalen Funktion gemäß einer Funktion von TH und TL, um eine Ausgabe zu erhalten, die eine Schätzung von X^Y ist.

2. Verfahren gemäß Anspruch 1, wobei die Dp2-Schaltung KH und KL so erzeugt, dass KH und KL jeweils eine Genauigkeit so groß wie M2 aufweisen.

3. Verfahren gemäß Anspruch 1, wobei X eine Gleitkommazahl mit einem Exponenten k und einer Mantisse s ist, wobei das Verfahren ferner umfasst:

Berechnen, durch die elektronische Vorrichtung, p = s $\geq$ 0,5 ? (1 + s)/2 : (1+s);
Berechnen, durch die elektronische Vorrichtung, M2 als 1 - p;
Berechnen, durch die elektronische Vorrichtung, {M1H, M1L} als (Log2(1-p))/(1-p), so dass M1H ein hochsignifikanter Teil eines Ergebnisses von (Log2(1-p))/(1-p) ist und M1L ein niedrigsignifikanter Teil eines Ergebnisses von (Log2(1-p))/(1-p) ist;
Berechnen, durch die elektronische Vorrichtung, n = s $\geq$ 0,5 ? k + 1: k; und
Berechnen, durch die elektronische Vorrichtung, {KH, KL} = n*1.0 + M1H*M2 + M1L*M2 so dass KH ein hochsignifikanter Teil eines Ergebnisses von n*1.0 + M1H*M2 + M1L*M2 ist und KL ein niedrigsignifikanter Teil von n*1.0 + M1H*M2 + M1L*M2 ist.

4. Verfahren gemäß Anspruch 3, wobei das Berechnen von (Log2(1-p))/(1-p) durch die elektronische Vorrichtung unter Verwendung einer Tabelle durchgeführt wird.

5. Verfahren gemäß Anspruch 4, wobei das Berechnen von n*1,0 + M1H*M2 + M1L*M2 + M1L*M2 unter Verwendung einer Dreielement-Punktprodukt-(Dp3)-Schaltung durchgeführt wird.

6. Verfahren gemäß Anspruch 5, wobei KH und KL eine Genauigkeit so groß wie M2 haben.

7. Verfahren gemäß Anspruch 1, wobei M1L weniger Präzisionsbits als M1H hat.

8. Verfahren gemäß Anspruch 1, wobei die Funktion von Y und die Funktion von X gemäß Tabelle 1 definiert sind.

9. Verfahren gemäß Anspruch 8, ferner umfassend ein Bestimmen eines Vorzeichenwerts gemäß X und Y, wie in Tabelle 1 definiert, wobei das Verfahren ferner ein Einstellen, durch die elektronische Vorrichtung, eines Vorzeichens für die Ausgabe der zweiten transzendentalen Funktion gemäß dem Vorzeichenwert umfasst.

10. Verfahren gemäß Anspruch 1, wobei ein Berechnen der zweiten transzendentalen Funktion gemäß der Funktion von TH und TL umfasst:

Erhalten, durch die elektronische Vorrichtung, von TH_Int als einem Ganzzahlanteil von TH;
Erhalten, durch die elektronische Vorrichtung, von TH_Frac als einem Bruchteil von TH;
Kombinieren, durch die elektronische Vorrichtung, von TH_Frac und TL, um T_All_Frac zu erhalten; und
Eingeben, durch die elektronische Vorrichtung, TH_Frac und T_All_Frac in die zweite transzendentale Funktion, um die Schätzung von X^Y zu erhalten.

11. Elektronische Vorrichtung zum Berechnen von X^Y, umfassend:

(i) eine erste transzendentale Funktionsstufe, die programmiert ist, um als Eingabe eine Funktion von X zu nehmen und M1H, M1L und M2 auszugeben, wobei M2 eine erste Genauigkeit hat und M1H und M1L kombiniert eine zweite Genauigkeit haben, die größer ist als die erste Genauigkeit;
(ii) eine erste Punktproduktstufe, die programmiert ist, um KH und KL gemäß einem Produkt aus M1H und M2 und einem Produkt aus M1L und M2 auszugeben;
(iii) eine zweite Punktproduktstufe, die programmiert ist, um ein Produkt aus (a) einer Funktion von Y und (b) sowohl KH als auch KL zu berechnen, um eine hochsignifikante Ausgabe TH und eine niedrigsignifikante Ausgabe TL zu erhalten;
(iv) eine zweite transzendentale Funktionsstufe, die programmiert ist, um eine Funktion von TH und TL als Eingänge zu nehmen und eine Schätzung von X^Y auszugeben;

wobei M1L weniger Präzisionsbits als M1H hat;
wobei die erste Punktproduktstufe und die zweite Punktproduktstufe unter Verwendung einer oder mehrerer Vier-Element-Punktprodukt-(Dp4) Schaltungen implementiert sind.

12. Elektronische Vorrichtung gemäß Anspruch 11, wobei:

die erste Punktproduktstufe eine Zwei-Element-Punktprodukt-(Dp2)-Schaltung umfasst; und
die Dp2-Schaltung so programmiert ist, um KH und KL so auszugeben, dass KH und KL jeweils eine Präzision so groß wie M2 haben.

13. Elektronische Vorrichtung nach Anspruch 11, worin X eine Gleitkommazahl mit einem Exponenten k und einer Mantisse s ist, wobei die elektronische Vorrichtung weiter für Folgendes programmiert ist:

Berechnen $p = s \geq 0.5$ ? $(1 + s)/2$ : $(1+s)$;
Berechnet M2 als 1 - p;
Berechnen von {M1H, M1L} als (Log2(1-p))/(1-p), so dass M1H ein hochsignifikanter Teil eines Ergebnisses von (Log2(1-p))/(1-p) ist und M1L ein niedrigsignifikanter Teil eines Ergebnisses von (Log2(1-p))/(1-p) ist, wobei Log2(1-p) unter Verwendung der ersten transzendentalen Funktionsstufe implementiert ist;

Berechnen n = s ≥ 0,5 ? k + 1: k; und

Berechnen {KH, KL} = n*1.0 + M1H*M2 + M1L*M2 so dass KH ein hochsignifikanter Teil eines Ergebnisses von n*1.0 + M1H*M2 + M1L*M2 ist und KL ein niedrigsignifikanter Teil von n*1.0 + M1H*M2 + M1L*M2 ist.

**14.** Elektronische Vorrichtung gemäß Anspruch 11, wobei:

die elektronische Vorrichtung ferner programmiert ist, um die Funktion von X und die Funktion von Y gemäß Tabelle 1 zu berechnen; und

die elektronische Vorrichtung ferner programmiert ist, um einen Vorzeichenwert gemäß X und Y gemäß Tabelle 1 zu bestimmen und ein Vorzeichen für den Ausgang der zweiten transzendentalen Funktionsstufe gemäß dem Vorzeichenwert einzustellen.

**15.** Elektronische Vorrichtung gemäß Anspruch 11, wobei die elektronische Vorrichtung ferner programmiert ist, um die Funktion von TH und TL durch die folgenden zu berechnen:

Erhalten von TH_Int als einem Ganzzahlanteil von TH;

Erhalten von TH_Frac als einem Bruchteil von TH;

Kombinieren von TH_Frac und TL, um T_All_Frac zu erhalten; und

Eingeben TH_Frac und T_All_Frac in die zweite transzendentale Funktion.

**Revendications**

**1.** Un procédé pour calculer X^Y comprenant :

(i) le fait de calculer, par un dispositif électronique, une première fonction transcendantale prenant comme entrée une fonction de X, la première fonction transcendantale sortant M1H, M1L et M2, M2 ayant une première précision et M1H et MIL combinés ayant une deuxième précision supérieure à la première précision ;

(ii) le fait de calculer, par un circuit de produit scalaire à deux éléments (DP2) du dispositif électronique, KH et KL selon un produit de M1H et M2 et un produit de M1L et M2 ;

(iii) le fait de calculer, par le dispositif électronique, un produit de (a) une fonction de Y et (b) à la fois KH et KL pour obtenir une sortie TH à haute signification et une sortie TL à faible signification ;

(iv) le fait de calculer, par le dispositif électronique, une deuxième fonction transcendantale selon une fonction de TH et TL pour obtenir une sortie qui est une estimation de X^Y.

**2.** Le procédé selon la revendication 1, dans lequel le circuit Dp2 produit KH et KL de sorte que KH et KL ont chacun une précision aussi grande que M2.

**3.** Le procédé selon la revendication 1, dans lequel X est un nombre à virgule flottante ayant un exposant k et une mantisse s, le procédé comprenant en outre :

le fait de calculer, par le dispositif électronique, p = s ≥ 0,5 ? (1 + s)/2 : (1+s) ;

le fait de calculer, par le dispositif électronique, M2 comme étant 1 - p ;

le fait de calculer, par le dispositif électronique, {M1H, M1L} comme étant (Log2(1-p)/(1-p), de sorte que M1H est une partie à haute signification d'un résultat (Log2(1-p)/(1-p) et M1L est une partie à faible signification d'un résultat (Log2(1-p)/(1-p) ;

le fait de calculer, par le circuit électronique, n = s ≥ 0,5 ? k + 1 : k ; et

le fait de calculer, par le dispositif électronique, {KH, KL} = n*1,0 + M1H*M2 + M1L*M2 de telle sorte que KH soit une partie à haute signification d'un résultat de n*1,0 + M1H*M2 + M1L*M2 et KL soit une partie à faible signification de n*1,0 + M1H*M2 + M1L*M2.

**4.** Le procédé selon la revendication 3, dans lequel le fait de calculer (Log2(1-p)/(1-p) est effectué par le dispositif électronique en utilisant un tableau.

**5.** Le procédé selon la revendication 4, dans lequel le fait de calculer n*1,0 + M1H*M2 + M1L*M2 est effectué en utilisant un circuit de produit scalaire à trois éléments (Dp3).

**6.** Le procédé selon la revendication 5, dans lequel KH et KL ont une précision aussi grande que M2.

**7.** Le procédé selon la revendication 1, dans lequel M1L a moins de bits de précision que M1H.

**8.** Le procédé selon la revendication 1, dans lequel la fonction de Y et la fonction de X sont définies selon le Tableau 1.

**9.** Le procédé selon la revendication 8, comprenant en outre le fait de déterminer une valeur de signe selon X et Y telle que définie dans le Tableau 1, le procédé comprenant en outre le fait de définir, par le dispositif électronique, un signe de la sortie de la deuxième fonction transcendantale selon la valeur de signe.

**10.** Le procédé selon la revendication 1, dans lequel le fait de calculer la deuxième fonction transcendantale selon la fonction de TH et TL comprend :

le fait d'obtenir, par le dispositif électronique, TH_Int en tant que partie entière de TH ;
le fait d'obtenir, par le dispositif électronique, TH_Frac en tant que partie fractionnaire de TH ;
le fait de combiner, par le dispositif électronique, TH_Frac et TL pour obtenir T_All_Frac ; et
le fait d'entrer, par le dispositif électronique, TH_Frac et T_All_Frac dans la deuxième fonction transcendantale pour obtenir l'estimation de X^Y.

**11.** Un dispositif électronique pour calculer X^Y comprenant :

(i) un premier étage de fonction transcendantale programmé pour prendre en tant qu'entrée une fonction de X et sortir M1H, M1L et M2, M2 ayant une première précision et M1H et M1L combinés ayant une deuxième précision supérieure à la première précision ;
(ii) un premier étage de produit scalaire programmé pour délivrer KH et KL selon un produit de M1H et M2 et un produit de M1L et M2 ;
(iii) un deuxième étage de produit scalaire programmé pour calculer un produit de (a) une fonction de Y et (b) à la fois KH et KL pour obtenir une sortie TH à haute signification et une sortie TL à faible signification ;
(iv) un deuxième étage de fonction transcendantale programmé pour prendre en tant qu'entrée une fonction de TH et TL et pour sortir une estimation de X^Y ;

M1L ayant moins de bits de précision que M1H ;
le premier étage de produit scalaire et le deuxième étage de produit scalaire étant mis en oeuvre en utilisant un ou plusieurs circuits de produit scalaire à quatre éléments (Dp4).

**12.** Le dispositif électronique selon la revendication 11, dans lequel :

le premier étage de produit scalaire comprend un circuit de produit scalaire à deux éléments (Dp2) ; et
le circuit Dp2 est programmé pour sortir KH et KL de telle sorte que KH et KL ont chacun une précision aussi grande que M2.

**13.** Le dispositif électronique selon la revendication 11, dans lequel X est un nombre à virgule flottante ayant un exposant k et une mantisse s, le dispositif électronique est en outre programmé pour :

calculer p = s ≥ 0,5 ? (1 + s)/2 : (1+s) ;
calculer M2 comme étant 1 - p ;
calculer {M1H, M1L} comme étant (Log2(1-p)/(1-p), de sorte que M1H est une partie à haute signification d'un résultat (Log2(1-p)/(1-p) et M1L est une partie à faible signification d'un résultat (Log2(1-p)/(1-p), Log2(1-p) étant exécuté en utilisant la première étape de fonction transcendantale ;
calculer n = s ≥ 0,5 ? k + 1 : k ; et
calculer {KH, KL} = n*1,0 + M1H*M2 + M1L*M2 + M1L*M2 de sorte que KH est une partie à haute signification d'un résultat de n*1,0 + M1H*M2 + M1L*M2 et KL est une partie à faible signification de n*1,0 + M1H*M2 + M1L*M2.

**14.** Le dispositif électronique selon la revendication 11, dans lequel :

le dispositif électronique est en outre programmé pour calculer la fonction de X et la fonction de Y conformément au Tableau 1 ; et

le dispositif électronique est en outre programmé pour déterminer une valeur de signe selon X et Y selon le Tableau 1 et pour définir un signe de la sortie du deuxième étage de fonction transcendantale selon la valeur de signe.

15. Le dispositif électronique selon la revendication 11, dans lequel le dispositif électronique est en outre programmé pour calculer la fonction de TH et TL par :

l'obtention de TH_Int en tant que partie entière de TH ;
l'obtention de TH_Frac en tant que fraction fractionnaire de TH ;
la combinaison de TH_Frac et TL pour obtenir T_All_Frac ; et
l'entrée du TH_Frac et T_All_Frac dans le deuxième étage de fonction transcendantale.

Processor 102

112

100

Mass Storage
Device(s) 108

Hard Disk Drive
124

Removable
Storage 126

Memory Device(s)
104

RAM 114

ROM 116

Input/Output (I/O)
Device(s) 110

Interface(s) 106

User Interface
118

Network
Interface 120

Peripheral
Device Interface
122

Display Device 130

Fig. 1

```
┌─────────────────────────────────┐
│           Pipe 0 201            │          200
└─────────────────────────────────┘
                │
                ▼
┌─────────────────────────────────┐
│     Float2Fixed Convert 202     │
└─────────────────────────────────┘
                │
                ▼
┌─────────────────────────────────┐
│           Pipe 1 203            │
└─────────────────────────────────┘
                │
                ▼
┌─────────────────────────────────┐
│        c = Table [2][i] 204     │
└─────────────────────────────────┘
                │
                ▼
┌─────────────────────────────────┐
│           Pipe 2 206            │
└─────────────────────────────────┘
                │
                ▼
┌─────────────────────────────────┐
│    c(x-x0), b = Table[1][i] 208 │
└─────────────────────────────────┘
                │
                ▼
┌─────────────────────────────────┐
│           Pipe 3 209            │
└─────────────────────────────────┘
                │
                ▼
┌─────────────────────────────────┐
│      b(x-x0), c(x-x0)(x-x1)     │
│        a = Table [0][i] 210     │
└─────────────────────────────────┘
                │
                ▼
┌─────────────────────────────────┐
│           Pipe 4 212            │
└─────────────────────────────────┘
                │
                ▼
┌─────────────────────────────────────┐
│ a + b(x-x0) + c(x-x0)(x-x1) 214 │
└─────────────────────────────────────┘
                │
                ▼
┌─────────────────────────────────┐
│           Pipe 5 216            │
└─────────────────────────────────┘
                │
                ▼
┌─────────────────────────────────┐
│     Fixed2Float Convert 218     │
└─────────────────────────────────┘
                │
                ▼
┌─────────────────────────────────┐
│           Pipe 6 220            │
└─────────────────────────────────┘
```

Fig. 2

Fig. 3

```
x = 1.0+(double)i/64.0 + (2.0 - sqrt3)/256.0;
x_5 = 1.0 + (double)i/64.0+1.0/128.0;
x1 = 1.0+(double)(i+1)/64.0 - (2.0 - sqrt3)/256.0; 401
```

```
a = 1.0 / sqrt(x);
b = 1.0 / (x_5 - x);
c = (1.0 / sqrt(x_5) -  a)*b;
c = (1.0/sqrt(x1) - a) / (x1 - x)*(x1 - x_5);
c = c - b / (x1 - x_5);  402
```

```
b1 = b + c * sqrt(3.0) / 256.0;
a1 = a - (b * (2.0 - sqrt(3.0)) / 256.0) + c * (4.0 - 2.0 * sqrt(3.0)) / (double)
(1<<16);  403
```

```
a1Int = (int)(a1 * 1<<25));
bInt = (int)((-1) * b1 * (1<<18));
cIt = (int)(c * (1<<10)); 404
```

```
if ((a1Int & 0x1) != 0)
    a1int = (a1int >> 1) + 1;
else
    a1int = a1int >> 1;
if ((b1int & 0x1) != 0)
    bInt = ((bInt >> 1) + 1);
else
    b1int = ((bInt >> 1));
if ((cInt & 0x1) != 0)
    cInt = (cInt >> 1) + 1;
else
    cInt = (cInt >> 1);
Table[0][i] = a1Int & 0x7fffff
Table[1][i] = bInt;
Table[2][i] = cInt;  405
```

400

Fig. 4

Pipe 0 201

↓

Float2Fixed Convert 202

↓

Pipe 1 203

↓

c = Table [2][i] 204

↓

Pipe 2 206

↓

c(x-x0), b = Table[1][i] 208

↓

Pipe 3 209

↓

b(x-x0), c(x-x0)(x-x1)
a = Table [0][i] 210

↓

Pipe 4 212

↓

a + b(x-x0) + c(x-x0)(x-x1) 214

↓

Pipe 5 216

↓

Fixed2Float Convert 218

↓

Pipe 6 220

Addittional Pipeline for Output2
210

Fig. 5

Fig. 6

X'

TranscendentalForLog2(x) 700

n    M1H    M1L    M2

Dp3 702

KH                KL

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 48689114
- US 6128638 A